# DEMANDE DE BREVET EUROPEEN

(11) **EP 3 399 229 A1**
(43) Date de publication de la demande: **07.11.2018**
(21) Numéro de dépôt: 18170627.6
(22) Date de dépôt: 03.05.2018
(51) Int. Cl.: F21V 8/00, D03D 15/00

(54) **BANDEAU LUMINEUX FLEXIBLE ET DISPOSITIF EN FAISANT APPLICATION**

(30) Priorité: 05.05.2017 FR 1753972
(71) Demandeur: Mafelec, 38490 Chimilin (FR)
(72) Inventeur: ESNAULT, Matthieu, 38430 St Jean de Moirans (FR); SORLIN, Stéphane, 74410 Saint Jorioz (FR)
(74) Mandataire: Cabinet Beau de Loménie

(57) **Abrégé**

L'invention concerne un bandeau lumineux (**1**) comportant une structure de support allongée (**14**) présentant une surface de réception (**15**) présentant un profil adapté pour réfléchir la lumière visible émise en vue de la diriger dans une zone d'éclairage, les assemblages d'émission (**3**) étant montés sur la structure de support (**14**) à l'aide d'un système de montage assurant aux assemblages d'émission (**3**) un montage libre les uns par rapport aux autres et une liaison partielle entre la structure de support et les assemblages d'émission.

## Description

L'invention concerne le domaine technique des dispositifs lumineux d'éclairage au sens général mettant en oeuvre un assemblage d'une ou plusieurs fibres optiques d'éclairage à diffusion latérale.

Dans l'état de la technique, il est connu de plus en plus de dispositifs lumineux utilisant un assemblage d'une ou de plusieurs fibres optiques à diffusion latérale. Chaque fibre optique d'un tel assemblage présente une première terminaison, une seconde terminaison et une surface latérale qui s'étend entre la première terminaison et la seconde terminaison. Dans une fibre optique à diffusion latérale, lorsqu'une lumière est introduite dans la fibre par l'une des terminaisons, une partie de cette lumière est diffusée au travers de la surface latérale de la fibre. Des fibres optiques à diffusion latérale sont connues par exemple du document FR 2 714 147. De manière générale, la surface latérale de la fibre optique est altérée, par exemple par un traitement mécanique, thermique ou chimique, pour former une zone d'émission lumineuse latérale en chaque point ainsi altéré.

Le grand avantage de l'utilisation d'une fibre optique à diffusion latérale est de pouvoir offrir une surface d'émission lumineuse de grande dimension, à la manière d'un tube fluorescent par exemple, en utilisant au départ une source lumineuse de petite dimension, qui peut par exemple être considéré comme ponctuelle. Une telle source lumineuse peut être une diode électroluminescente (DEL), une diode laser, une ampoule à incandescence, etc.

Un autre avantage de l'utilisation d'une fibre optique à diffusion latérale concerne sa capacité de flexion permettant de réaliser un dispositif lumineux non linéaire. Par exemple, le document WO 2016/198772 décrit un article textile tissé intégrant de telles fibres optiques permettant d'être intégrées dans des supports selon des courbures déterminées en fonction des applications envisagées.

Un inconvénient de la mise en oeuvre d'une fibre optique à diffusion latérale concerne l'intensité lumineuse émise qui pour certaines applications est trop faible.

Le document WO 2016/198772 montre la réalisation d'un assemblage de fibres optiques qui sont rassemblées en un faisceau dans une enveloppe translucide. L'enveloppe translucide est par exemple sous la forme d'un fourreau tubulaire qui rassemble les fibres optiques disposées sensiblement parallèlement les unes aux autres. Dans cet exemple de réalisation, les fibres optiques à diffusion latérale sont serrées les unes contre les autres sur toute leur longueur entre leur première et leur seconde terminaison. Les premières terminaisons des fibres optiques sont rassemblées pour former la première terminaison de l'assemblage et les secondes terminaisons des fibres optiques sont rassemblées pour former la seconde terminaison de l'assemblage. Pour certaines applications, un tel assemblage de fibres optiques ne permet pas d'obtenir le niveau d'éclairage requis.

Il est également connu par la demande de brevet US 2016/0299276 un guide de lumière linéaire comportant au moins une fibre optique de type à émission latérale recouverte sur une partie de sa circonférence par une résine flexible réfléchissant la lumière, cette résine ne recouvrant pas une section ouverte de la fibre optique à émission latérale. Selon la description, la fibre optique et la résine flexible peuvent adhérer l'une à l'autre avec un agent adhésif transparent. La solution proposée par ce document permet d'obtenir un guide de lumière linéaire sur une grande longueur avec une intensité lumineuse améliorée. Cependant, les fibres optiques d'un tel guide de lumière sont soumises à des contraintes mécaniques dans le cas de la déformation du guide de lumière. Ainsi, un tel guide de lumière n'est pas adapté à être déformé pour suivre les contours des supports destinés à les recevoir, puisque les performances de guidage et d'émission de la lumière sont dégradées.

La présente invention vise donc à remédier aux inconvénients de l'art antérieur en proposant une solution à fibres optiques à diffusion latérale, permettant d'utiliser leur capacité de flexion tout en obtenant une émission lumineuse dont l'intensité est maximale et homogène en direction de la zone d'éclairage.

Pour atteindre un tel objectif, l'objet de l'invention concerne un bandeau lumineux comportant une structure de support allongée présentant une surface de réception pour des assemblages d'émission et aménagée pour réfléchir la lumière émise par les assemblages d'émission et pour présenter un profil adapté pour réfléchir la lumière visible émise en vue de la diriger dans une zone d'éclairage, les assemblages d'émission étant montés sur la structure de support à l'aide d'un système de montage et étant formés d'une ou de plusieurs fibres optiques à diffusion latérale, du type dans lequel l'assemblage d'émission comporte une première terminaison, une seconde terminaison et une surface latérale qui s'étend entre la première terminaison et la seconde terminaison et au travers de laquelle est émise une lumière visible, au moins une terminaison étant destinée à être connectée à une source de lumière. Selon l'invention, la structure de support est flexible et le bandeau comporte en tant que système de montage, une structure de recouvrement des assemblages d'émission situés les plus éloignés de la structure de support, cette structure de recouvrement étant au moins translucide et fixée au support pour assurer aux assemblages d'émission un montage libre les uns par rapport aux autres et une liaison partielle entre la structure de support et les assemblages d'émission pour autoriser un glissement relatif entre la structure de support et chaque assemblage d'émission en vue d'assurer la flexion du bandeau lumineux.

De plus, le bandeau selon l'invention peut comporter en outre en combinaison au moins l'une et/ou l'autre des caractéristiques additionnelles suivantes :
- plusieurs assemblages d'émission organisées sous la forme d'au moins une ou de plusieurs rangées lumineuses empilées les uns sur les autres à partir de la structure de support ;
- la surface de réception de la structure de support comporte un état de surface ou un revêtement pour réfléchir la lumière de façon spéculaire ou diffuse ;
- la surface de réception de la structure de support présente un profil de forme concave pour réfléchir la lumière en direction de la zone d'éclairage ;
- la surface de réception de la structure de support présente des rainures de réception des assemblages d'émission pour réfléchir la lumière en direction de la zone d'éclairage ;
- un assemblage d'émission comporte une unique fibre optique à diffusion latérale ou plusieurs fibres optiques à diffusion latérale.

Un autre objet de l'invention est de proposer un dispositif lumineux comportant au moins un bandeau lumineux conforme à l'invention comportant des assemblages d'émission connectés à une source de lumière par au moins une première terminaison.

Selon une application, le dispositif lumineux comporte un bandeau lumineux monté dans le chant d'une porte de manière que la partie cachée d'un joint d'étanchéité au moins translucide se trouve placée dans la zone d'éclairage de sorte que la partie visible dudit joint soit lumineuse.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique d'un dispositif d'éclairage mettant en oeuvre un bandeau lumineux conforme à l'invention.
La **Figure 2** est une vue en perspective d'un exemple de réalisation d'une structure de support faisant partie d'un bandeau lumineux conforme à l'invention.
La **Figure 3** est une vue schématique en perspective d'un exemple de réalisation d'un bandeau lumineux selon l'invention.
La **Figure 4** illustre de manière schématique en coupe, une variante de réalisation d'un bandeau lumineux selon l'invention.
La **Figure 5** est une vue schématique en coupe d'un exemple d'application d'un bandeau lumineux selon l'invention.

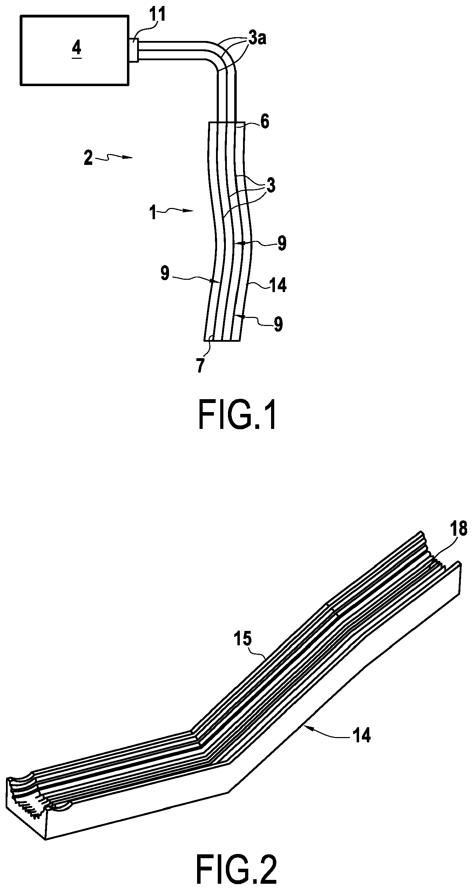

Tel que cela ressort de la **Fig. 1****,** l'objet de l'invention concerne un bandeau lumineux flexible **1** destiné à faire partie d'un dispositif lumineux **2** de tous types assurant une fonction d'éclairage ou de signalisation par exemple. Le bandeau lumineux **1** comporte des assemblages d'émission lumineuse **3** formés chacun par une ou plusieurs fibres optiques à diffusion latérale. Le dispositif lumineux **2** comporte également au moins une source de lumière **4** raccordée optiquement aux assemblages d'émission lumineuse **3.**

Chaque assemblage d'émission lumineuse **3** à une ou plusieurs fibre(s) optique(s) à diffusion latérale qui est ci-après dénommé assemblage d'émission **3** comporte au moins une fibre optique présentant une première terminaison **6,** une seconde terminaison **7** et une surface latérale **9** qui s'étend entre la première terminaison **6** et la seconde terminaison **7.** Comme la fibre optique est une fibre optique à diffusion latérale, une lumière visible est émise au travers de la surface latérale **9.**

Selon une variante de mise en oeuvre, un assemblage d'émission **3** comporte une unique fibre optique à diffusion lumineuse latérale.

Selon une autre variante de mise en oeuvre, un assemblage d'émission **3** comporte plusieurs fibres optiques à diffusion lumineuse latérale comprenant chacune une première terminaison et une seconde terminaison et une surface latérale qui s'étend entre la première terminaison et la seconde terminaison. Un exemple d'un tel assemblage est par exemple décrit dans le document WO 2016/198772 qui montre la réalisation d'un assemblage de fibres optiques qui sont rassemblées en un faisceau dans une enveloppe translucide. L'enveloppe translucide est par exemple sous la forme d'un fourreau tubulaire qui rassemble les fibres optiques disposées sensiblement parallèlement les unes aux autres. Dans cet exemple de réalisation, les fibres optiques à diffusion latérale sont serrées les unes contre les autres sur toute leur longueur entre leur première terminaison et leur seconde terminaison. Les premières terminaisons des fibres optiques sont rassemblées pour former la première terminaison de l'assemblage et les secondes terminaisons des fibres optiques sont rassemblées pour former la seconde terminaison de l'assemblage.

Du point de vue de l'invention, on considérera dans le présent texte un assemblage d'émission **3** de plusieurs fibres optiques comme étant équivalent à une fibre optique unique, donc équivalent à un assemblage d'une unique fibre optique. Ainsi, un assemblage d'émission **3** de plusieurs fibres optiques comporte une première terminaison **6,** une seconde terminaison **7** et une surface latérale **9** qui s'étend entre la première terminaison **6** et la seconde terminaison **7** et au travers de laquelle est émise une lumière visible. Dans l'exemple d'un assemblage de fibres optiques à diffusion latérale du document WO 2016/198772, la surface latérale de l'assemblage est constituée par la surface latérale du fourreau tubulaire.

On pourrait également envisager de réaliser un assemblage de fibres optiques à diffusion latérale dans lequel les fibres ne seraient serrées les unes contre les autres que sur une partie de leur longueur. Par exemple on peut réaliser un assemblage de fibres optiques à diffusion latérale dans lequel les fibres ne sont accolées les unes aux autres qu'aux terminaisons de l'assemblage, c'est-à-dire uniquement au niveau d'une part de leur premières terminaisons respectives et d'autre part au niveau de leur secondes terminaisons respectives.

De manière générale, la surface latérale de l'assemblage d'émission **3** est constituée par l'ensemble des surfaces latérales des fibres optiques à diffusion latérale de l'assemblage d'émission.

Dans l'exemple de réalisation illustré sur la **Fig. 1****,** le bandeau lumineux **1** comporte par exemple trois assemblages d'émission **3** de fibres optiques à diffusion latérale, chacun des assemblages d'émission **3** pouvant comporter une unique fibre optique à diffusion latérale ou plusieurs fibres optiques à diffusion latérale.

Une fibre optique à diffusion latérale peut être réalisée à l'aide de différents matériaux, par exemple du verre de silice ou des matériaux polymères tels que le poly méthacrylate de méthyle (PMMA). Une telle fibre a subi un traitement de sa surface latérale **9** de telle sorte qu'une partie d'une lumière introduite dans la fibre optique par une de ses terminaisons est diffusée par la surface latérale **9.** Une fibre optique à diffusion latérale est par exemple réalisée selon l'enseignement du document FR 2 714 147 ou par tout autre procédé connu de l'homme du métier. De manière connue, la fibre optique à diffusion latérale peut être réalisée de telle sorte qu'une unique portion, plusieurs portions, ou l'intégralité de la surface latérale comprenne(nt) des zones d'émission lumineuse latérale.

Dans l'exemple de réalisation illustré à la **Fig. 1****,** les premières terminaisons **6** des assemblages d'émission **3** sont connectées optiquement à la source de lumière **4** par un coupleur optique **11** alors que les deuxièmes terminaisons ne sont pas connectées optiquement à une source de lumière. Selon une autre variante de réalisation non illustrée, les deuxièmes terminaisons **7** des assemblages d'émission **3** peuvent être connectées optiquement à une deuxième source de lumière différente ou non de la source de lumière **4** connectée aux premières terminaisons **6.**

La source de lumière **4** est connectée optiquement à la première terminaison **6** des assemblages d'émission **3** soit directement soit à l'aide d'une ou de plusieurs fibres optiques de transport ou soit comme dans l'exemple illustré à la **Fig. 1****,** par les assemblages d'émission **3** comportant chacun une partie de transport **3a** ne présentant pas de diffusion latérale de la lumière. Selon cet exemple illustré, chaque assemblage d'émission **3** comporte entre le coupleur optique **11** et sa première terminaison **6,** une partie de transport **3a** guidant la lumière sans émission latérale. Il est rappelé que l'émission latérale de la lumière intervient uniquement entre les premières terminaisons **6** et les deuxièmes terminaisons **7,** les premières **6** et deuxièmes **7** terminaisons étant considérées comme les extrémités de la partie de la fibre optique encadrant la partie présentant une émission latérale de lumière.

Comme expliqué, la lumière émise par la source de lumière **4** parcourt les assemblages d'émission **3** en direction des secondes terminaisons **7** des assemblages d'émission **3** avec émission latérale de la lumière uniquement entre les premières terminaisons **6** et les deuxièmes terminaisons **7.** La source de lumière **4** comporte par exemple une ou plusieurs diodes électroluminescentes, diodes laser, ampoules à incandescence. Cette source de lumière **4** est raccordée à une alimentation électrique en étant commandée par un circuit électronique de pilotage non représenté de tous types connus en soi.

Conformément à l'invention, le bandeau lumineux **1** comporte une structure de support allongée **14** présentant une surface de réception **15** pour les assemblages d'émission **3 (****Fig. 2****).** Cette structure de support **14** qui est réalisée en une ou plusieurs pièces, présente notamment, un corps solide de forme générale plate parallélépipédique s'étendant selon une longueur plus ou moins longue en fonction de l'application visée et selon une largeur adaptée pour recevoir côte à côte les assemblages d'émission **3** afin d'obtenir la largeur souhaitée pour la lumière émise. Il doit être compris que les assemblages d'émission **3** sont simplement posés sur la surface de réception **15.**

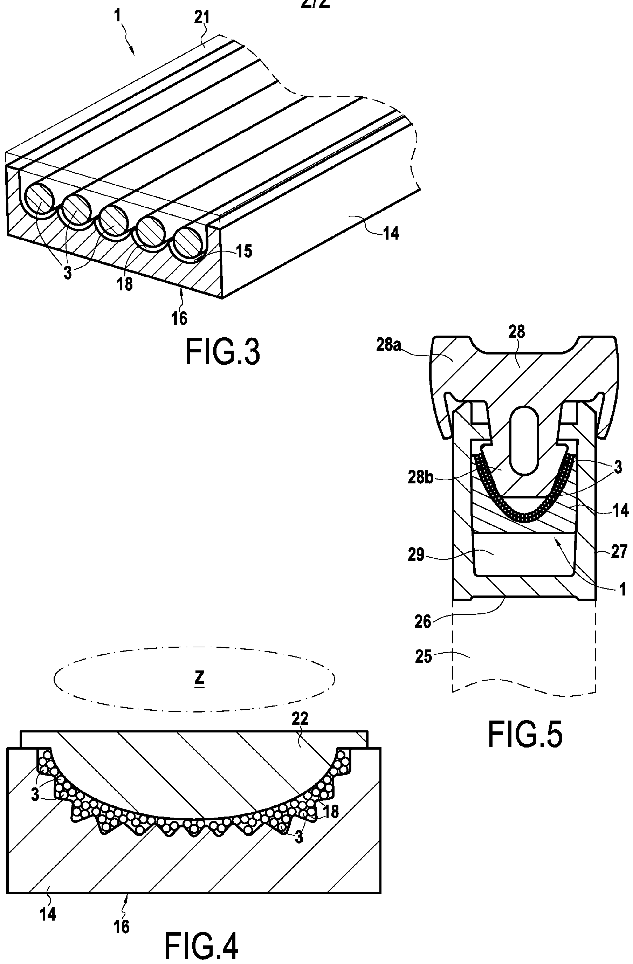

Selon une variante de réalisation, les assemblages d'émission **3** sont organisés sous la forme d'une rangée lumineuse en considérant que les assemblages d'émission **3** sont répartis les uns à côté des autres sur la surface de réception **15** de la structure de support **14 (****Fig. 3****).** Dans cette rangée, les assemblages d'émission **3** sont accolés ou distants les uns des autres.

Selon une variante de réalisation, les assemblages d'émission **3** sont organisés sous la forme de plusieurs rangées lumineuses superposées en considérant que les assemblages d'émission **3** sont empilés les uns sur les autres à partir de la structure de support **14 (****Fig. 4** et **Fig. 5****).** Les assemblages d'émission **3** sont empilés de toute manière appropriée avec un pas de décalage ou non d'une rangée à l'autre et selon une répartition homogène ou non. Les assemblages d'émission **3** sont identiques ou différents d'une rangée à l'autre.

Cette structure de support **14** possède une résistance mécanique adaptée pour supporter les assemblages d'émission **3** tout en présentant une capacité de souplesse ou de flexibilité pour pouvoir être déformé selon des courbures plus ou moins accentuées comme cela apparaît plus précisément à la **Fig. 2****.** Ainsi, la structure de support **14** peut être courbée selon sa direction longitudinale d'extension mais également transversalement en fonction des applications.

Typiquement, cette structure de support **14** peut typiquement être obtenue en polymère flexible (élastomère) tel en caoutchouc EPDM ou en silicone.

Cette structure de support **14** présente du côté interne du bandeau, une surface de réception **15** des assemblages d'émission **3** s'ouvrant du côté interne du bandeau **1.** La surface ouverte de réception **15** s'étend à l'opposé d'une face externe **16** de la structure de support. La surface de réception **15** est ouverte pour permettre de poser sur cette surface, les assemblages d'émission **3** dont les surfaces latérales **9** s'étendent de préférence d'une extrémité à l'autre de la structure de support **14.** Ainsi, les premières terminaisons **6** des assemblages d'émission **3** sont positionnées à proximité d'une extrémité de la structure de support **14** tandis que les deuxièmes terminaisons **7** des assemblages d'émission **3** sont positionnées de préférence à proximité de l'autre extrémité de la structure de support **14.**

Par ailleurs, la surface de réception **15** des assemblages d'émission **3** est aménagée pour réfléchir la lumière émise par les assemblages d'émission. Ainsi, la surface de réception **15** de la structure de support comporte un état de surface ou un revêtement adapté pour réfléchir la lumière de façon diffuse ou spéculaire. Par exemple, la surface de réception **15** possède un état de surface assimilable à un miroir capable de réfléchir la lumière émise par les assemblages d'émission **3.**

De façon complémentaire, la surface de réception **15** présente un profil adapté pour réfléchir la lumière visible émise par les assemblages d'émission **3** en vue de la diriger dans une zone d'éclairage **Z** déterminée.

Selon une variante de réalisation illustrée aux **Fig. 2** à **4****,** la surface de réception **15** de la structure de support présente des rainures **18** de réception des assemblages d'émission **3** pour réfléchir la lumière en direction de la zone d'éclairage. Chaque rainure **18** présente un profil concave par exemple demi-circulaire ou demi-elliptique aménagé sur toute la longueur de la structure de support **14** et selon une profondeur adaptée pour recevoir un unique assemblage d'émission **3** comme illustré à la **Fig. 3****.** Outre la fonction de réflexion de la lumière émise par les assemblages d'émission **3,** ces rainures **18** assurent le positionnement des assemblages d'émission **3.**

Selon une variante de réalisation illustrée à la **Fig. 5****,** la surface de réception **15** de la structure de support **14** présente un profil général de forme concave pour réfléchir la lumière en direction de la zone d'éclairage **Z.** Bien entendu, la surface de réception **15** de la structure de support **14** peut être aménagée pour comporter également des rainures **18** de réception des assemblages d'émission **3.** Ces rainures **18** assurent le positionnement des assemblages d'émission **3** ainsi que la réflexion de la lumière émise par les assemblages d'émission **3.**

Le bandeau lumineux **1** comporte également un système **21** de montage des assemblages d'émission **3** sur la structure de support **14** assurant aux assemblages d'émission un montage libre les uns par rapport aux autres et une liaison partielle entre la structure de support **14** et les assemblages d'émission **3** pour autoriser un glissement relatif entre la structure de support et chaque assemblage d'émission en vue d'assurer la flexion du bandeau lumineux. En d'autres termes, le système de montage **21** assure un maintien en position des assemblages d'émission **3** sur la structure de support **14,** sans toutefois assurer une fixation complète des assemblages d'émission **3** sur la structure de support **14.** Ainsi, lorsque le bandeau lumineux **1** doit prendre une forme courbée ou fléchie, les assemblages d'émission **3** se déplacent relativement par rapport à la structure de support qui est déformée, évitant ainsi une dégradation des assemblages d'émission **3.** Typiquement, les assemblages d'émission **3** peuvent se déplacer par glissement selon leur direction longitudinale d'extension. Il est à noter que le coupleur optique **11** n'est pas fixé à la structure de support **14** afin d'obtenir cette fonction de déplacement relatif. L'un des avantages de conserver une liberté de mouvement des assemblages d'émission **3** par rapport à la structure de support **14** est de limiter les contraintes mécaniques imposées aux fibres optiques lors de la déformation de la structure de support assurant de maintenir les performances optiques de guidage et d'émission lumineuse.

Le système de montage **21** peut être réalisé de toute manière appropriée.

Par exemple, le système de montage **21** peut comporter une série de liens ponctuels permettant d'attacher les assemblages d'émission **3** à la structure de support **14** avec une possibilité de glissement. Conformément à l'invention, le système de montage **21** est réalisé par une structure de recouvrement **22** des assemblages d'émission **3** situés les plus éloignés de la structure de support **14.**

Cette structure de recouvrement **22** est fixée à la structure de support **14** pour autoriser un glissement relatif entre la structure de support **14** et les assemblages d'émission **3** afin d'assurer la flexion du bandeau lumineux. Les assemblages d'émission **3** se trouvent positionnés ou pris en sandwich entre la structure de recouvrement **22** et la structure de support **14.** Dans l'exemple illustré à la **Fig. 3****,** la structure de recouvrement **22** se présente sous la forme d'un couvercle venant fermer la surface ouverte de réception de la structure de support. Dans l'exemple illustré à la **Fig. 4****,** la structure de recouvrement **22** se présente sous la forme d'un complexe structuré venant en contact et recouvrir les assemblages d'émission **3.**

Bien entendu, la structure de recouvrement **22** est au moins translucide ou transparente pour laisser passer la lumière émise par les assemblages d'émission **3.** Cette structure de recouvrement **22** peut être aménagée pour diriger ou concentrer la lumière dans une zone d'éclairage **Z.**

Il ressort de la description qui précède que le bandeau lumineux **1** conforme à l'invention présente un caractère flexible ou souple permettant de lui donner la forme voulue même avec des petits rayons de courbure. Le bandeau lumineux **1** conforme à l'invention permet de résoudre les problématiques liées à la déformation de fibres optiques à diffusion latérale dans le cas d'une liaison mécanique complète entre de telles fibres et leur support.

Dans le cas de fibres optiques fixées sur le support et soumises à une déformation, les brins de fibres optiques sont sujets à des contraintes mécaniques.

Ces contraintes mécaniques induisent deux phénomènes perturbateurs sur les caractéristiques lumineuses à savoir une augmentation des pertes de guidage de la lumière dans les zones de contraintes et une augmentation significative de la dispersion chromatique dans les zones de contraintes.

L'augmentation des pertes de guidage de la lumière signifie une émission lumineuse plus intense dans certaines portions de fibres, soumises à ces contraintes. Ce phénomène cause donc l'apparition d'inhomogénéité dans le rendu lumineux.

La dispersion chromatique traduit un comportement différent des fibres en fonction de la longueur d'onde du rayonnement propagé et diffusé. L'augmentation de cette dispersion dans les zones de contraintes se traduit par une différence dans la couleur de la lumière émise (modification de la couleur) ou par une séparation des couleurs (arc-en-ciel).

Le bandeau lumineux **1** selon l'invention qui conserve la liberté de mouvement des assemblages d'émission rapport à la structure de support permet de résoudre cette problématique. Le bandeau lumineux selon l'invention permet d'obtenir une émission lumineuse homogène aussi bien en intensité qu'en couleur.

Le bandeau lumineux **1** selon l'invention qui est aménagé pour réfléchir la lumière émise par les assemblages d'émission **3,** permet l'augmentation du rendement lumineux en direction de la zone d'éclairage. Ce bandeau lumineux **1** se caractérise par une intensité lumineuse optimale dans une direction donnée.

Le raccordement optique des assemblages d'émission **3** de ce bandeau lumineux **1** à au moins une source de lumière permet de disposer d'un dispositif lumineux pouvant être utilisé dans de nombreuses applications afin de réaliser par exemple une fonction de surlignage lumineux (éclairage d'ambiance) ou d'éclairage de zones (fonction d'ampoule).

Ce bandeau lumineux **1** peut être utilisé seul. Cependant, ce bandeau lumineux **1** se prête particulièrement à être monté dans une structure d'accueil plane ou courbe présente dans un métro, bus ou avion. La **Fig. 6** illustre un exemple d'application d'un bandeau lumineux **1** selon l'invention monté dans une porte **25.** Selon cet exemple, la porte **25** est pourvue au niveau de son chant **26,** d'un profilé **27** de montage d'un joint d'étanchéité ou de fermeture **28.** Ce joint **28** qui est réalisé en un matériau translucide ou transparent présente une partie visible **28a** s'étendant à l'extérieur du profilé et se prolongeant par une partie cachée **28b** montée dans le profilé. Le profilé **27** délimite intérieurement un logement **29** pour le bandeau lumineux **1** conforme à l'invention positionnée de manière que la face cachée **28b** du joint **28** se trouve placée dans la zone d'éclairage du bandeau lumineux. Ainsi, la lumière émise par les assemblages d'émission **3** illumine la partie cachée **28b** du joint de sorte que la partie visible **28a** du joint est lumineuse.

L'invention n'est pas limitée aux exemples décrits et représentés car diverses modifications peuvent y être apportées sans sortir de son cadre.

## Revendications

1. Bandeau lumineux **(1)** comportant une structure de support allongée **(14)** présentant une surface de réception **(15)** pour des assemblages d'émission **(3)** et aménagée pour réfléchir la lumière émise par les assemblages d'émission **(3)** et pour présenter un profil adapté pour réfléchir la lumière visible émise en vue de la diriger dans une zone d'éclairage **(Z),** les assemblages d'émission **(3)** étant montés sur la structure de support **(14)** à l'aide d'un système de montage **(21)** et étant formés d'une ou de plusieurs fibres optiques à diffusion latérale, du type dans lequel l'assemblage d'émission **(3)** comporte une première terminaison **(6),** une seconde terminaison **(7)** et une surface latérale **(9)** qui s'étend entre la première terminaison et la seconde terminaison et au travers de laquelle est émise une lumière visible, au moins une terminaison étant destinée à être connectée à une source de lumière **(4), caractérisé en ce que** la structure de support **(14)** est flexible et **en ce qu'**il comporte en tant que système de montage **(21),** une structure de recouvrement **(22)** des assemblages d'émission **(3)** situés les plus éloignés de la structure de support, cette structure de recouvrement **(22)** étant au moins translucide et fixée au support pour assurer aux assemblages d'émission **(3)** un montage libre les uns par rapport aux autres et une liaison partielle entre la structure de support et les assemblages d'émission pour autoriser un glissement relatif entre la structure de support et chaque assemblage d'émission **(3)** en vue d'assurer la flexion du bandeau lumineux.

2. Bandeau lumineux selon la revendication 1, **caractérisé en ce qu'**il comporte plusieurs assemblages d'émission **(3)** organisées sous la forme d'au moins une ou de plusieurs rangées lumineuses empilées les uns sur les autres à partir de la structure de support **(14).**

3. Bandeau lumineux selon l'une quelconque des revendications précédentes, **caractérisé en ce que** la surface de réception **(15)** de la structure de support **(14)** comporte un état de surface ou un revêtement pour réfléchir la lumière de façon spéculaire ou diffuse.

4. Bandeau lumineux selon l'une quelconque des revendications précédentes, **caractérisé en ce que** la surface de réception **(15)** de la structure de support **(14)** présente un profil de forme concave pour réfléchir la lumière en direction de la zone d'éclairage.

5. Bandeau lumineux selon l'une quelconque des revendications précédentes, **caractérisé en ce que** la surface de réception **(15)** de la structure de support **(14)** présente des rainures **(18)** de réception des assemblages d'émission **(3)** pour réfléchir la lumière en direction de la zone d'éclairage.

6. Bandeau lumineux selon l'une quelconque des revendications précédentes, **caractérisé en ce qu'**un assemblage d'émission **(3)** comporte une unique fibre optique à diffusion latérale ou plusieurs fibres optiques à diffusion latérale.

7. Dispositif lumineux **(2) caractérisé en ce qu'**il comporte au moins un bandeau lumineux **(1)** selon l'une quelconque des revendications précédentes comportant des assemblages d'émission **(3)** connectés à une source de lumière **(4)** par au moins une première terminaison.

8. Dispositif lumineux selon la revendication précédente, **caractérisé en ce qu'**il comporte un bandeau lumineux **(1)** monté dans le chant d'une porte **(25)** de manière que la partie cachée **(28b)** d'un joint d'étanchéité **(28)** au moins translucide se trouve placée dans la zone d'éclairage de sorte que la partie visible **(28a)** dudit joint soit lumineuse.
